# EUROPEAN PATENT APPLICATION

(11) **EP 4 764 269 A1**
(43) Date of publication of application: **24.06.2026**
(21) Application number: 25222349.0
(22) Date of filing: 10.12.2025
(51) Int. Cl.: F16K 1/38, F16K 1/42, F16K 11/044, F16K 25/00, F16K 31/528, B05B 1/30, B05B 12/04, B05B 15/58

(54) **SWITCHING VALVE AND WET ATOMIZING APPARATUS WITH SWITCHING VALVE**

(30) Priority: 20.12.2024 JP 2024225785
(71) Applicant: Sugino Machine Limited, Namerikawa City, Toyama 936-8577 (JP)
(72) Inventor: HIMI, Futoshi, Namerikawa City, Toyama, 9368577 (JP); ASAI, Ryo, Namerikawa City, Toyama, 9368577 (JP)
(74) Representative: Global IP Europe Patentanwaltskanzlei

(57) **Abstract**

A switching valve (1) includes a valve body (2); a first port (20A) and a second port (20B) disposed to face each other inside the valve body (2) to communicate with each other; an input port (30) communicating with the first port (20A) and the second port (20B) to supply a slurry liquid material; and a valve element (10) configured to switch connection of the first port (20A) and the second port (20B) with respect to the input port (30), the valve element (10) including: a first needle portion (12A) configured to open and close an opening of the first port (20A); a second needle portion (12B) configured to open and close an opening of the second port (20B); and hard-body seals (6A, 6B, 46) configured to seal the first port (20A) and the second port (20B), respectively..

## Description

### BACKGROUND

### 1. Technical Field

The present invention relates to an atomizing apparatus including a processing chamber. More specifically, the present invention relates to a switching valve having a three-way valve structure suitable for slurry-type liquid materials, and to a wet atomizing apparatus including the switching valve.

### 2. Description of the Background

In chemical industries such as food, pharmaceuticals, and cosmetics, and in various fields such as automobiles, mechanical equipment, and electronic devices, various particulate materials are used. To atomize raw materials into a desired particle diameter, a wet atomizing apparatus is commonly used.

In a wet atomizing apparatus, raw material particles inside a tank are dispersed in a dispersion medium to form a liquid material, and the liquid material is pressure-fed from the tank into a processing chamber by a pump. The raw material particles discharged into the processing chamber are atomized by passing through an atomizing means. Typically, the processed liquid material discharged from the processing chamber is returned to the tank, and the atomizing process is repeated a predetermined number of times until a desired particle diameter is obtained, after which the material is collected.

However, in a recent wet atomizing apparatus, not only a single processing chamber is used, but multiple processing chambers may be arranged in parallel and different processing may be performed on the same liquid material (for example, JP2024-69886 A). In such cases, it becomes necessary to dispose a valve on the upstream side of the processing chambers to selectively switch the flow path to the processing chamber to which the liquid material is to be supplied.

As such a valve, it has been common to dispose an on-off valve upstream of each processing chamber and to switch the on-off state to change the supply flow path. A small and simple structure is desirable as the on-off valve, and a typical example is a manual two-way valve. The manual two-way valve can open and close the flow path merely by changing the orientation of a valve body having a through-flow channel.

### BRIEF SUMMARY

However, when flow paths are switched by combining two two-way valves, it is necessary to operate each valve individually, and liquid material remains on the upstream side of each valve, which leads to various problems. In a wet atomizing apparatus, a slurry-type liquid material containing raw substances is supplied. Depending on the raw material, the liquid material may contain highly viscous components or fibrous components that are likely to cause clogging.

Accordingly, in an atomizing apparatus having two processing chambers, it is desirable to use a three-way valve capable of directly switching supply flow paths to the two directions by a single switching valve. However, even when a general three-way valve is used, slurry intrudes into gaps between members around the valve body, damaging resin sealing members. For this reason, a general three-way valve cannot be used for a switching valve of an atomizing apparatus that processes slurry-type liquid material. Thus, an improved structure capable of handling slurry is required.

An object of the present invention is to provide a switching valve having a three-way valve structure, and a wet atomizing apparatus including the switching valve, the switching valve being capable of smoothly switching flow paths regardless of the form of the raw material contained in the liquid material supplied to the atomizing apparatus, and being capable of preventing slurry from entering between peripheral members due to excellent sealing performance, thereby enabling stable long-term use.

A first aspect of the present invention provides a switching valve, including:
a valve body;
a first port and a second port disposed to face each other inside the valve body to communicate with each other;
an input port communicating with the first port and the second port to supply a slurry liquid material; and
a valve element configured to switch connection of the first port and the second port with respect to the input port, the valve element including:
   a first needle portion configured to open and close an opening of the first port;
   a second needle portion configured to open and close an opening of the second port; and
   hard-body seals configured to seal the first port and the second port, respectively.

According to the switching valve and the wet atomizing apparatus including the switching valve of the present invention, the flow paths can be smoothly switched regardless of the form of the raw material contained in the liquid material supplied to the atomizing apparatus, and excellent sealing performance prevents slurry from entering between peripheral members, thereby enabling stable long-term operation.

### BRIEF DESCRIPTION OF THE DRAWINGS

FIG. 1A is a front view of a switching valve according to a first embodiment, and FIG. 1B is a cross-sectional view taken along line A-A in FIG. 1A.
FIG. 2A is a longitudinal sectional view as viewed along line C-C in FIG. 1B in a first flow-path connection state, and FIG. 2B is a partial longitudinal sectional view showing an intermediate state in which the valve is switched from the first flow-path connection state to a second flow-path connection state.
FIG. 3A is a longitudinal sectional view as viewed along line B-B in FIG. 1A in the first flow-path connection state, and FIG. 3B is a partial longitudinal sectional view showing an intermediate state in which the valve is switched from the first flow-path connection state to the second flow-path connection state.
FIG. 4 is an enlarged partial sectional view showing a hard-body seal of the switching valve in FIG. 1.
FIG. 5 is an enlarged partial sectional view showing a conventional sealing portion.
FIG. 6 is a schematic circuit diagram showing the switching valve in FIG. 1 incorporated into a wet atomizing apparatus having two processing chambers arranged in parallel.
FIG. 7A is a partial longitudinal sectional view of a switching valve according to a second embodiment in the first flow-path connection state, and FIG. 7B is a partial longitudinal sectional view showing an intermediate state in which the valve is switched from the first flow-path connection state to the second flow-path connection state.

### DETAILED DESCRIPTION

### First Embodiment

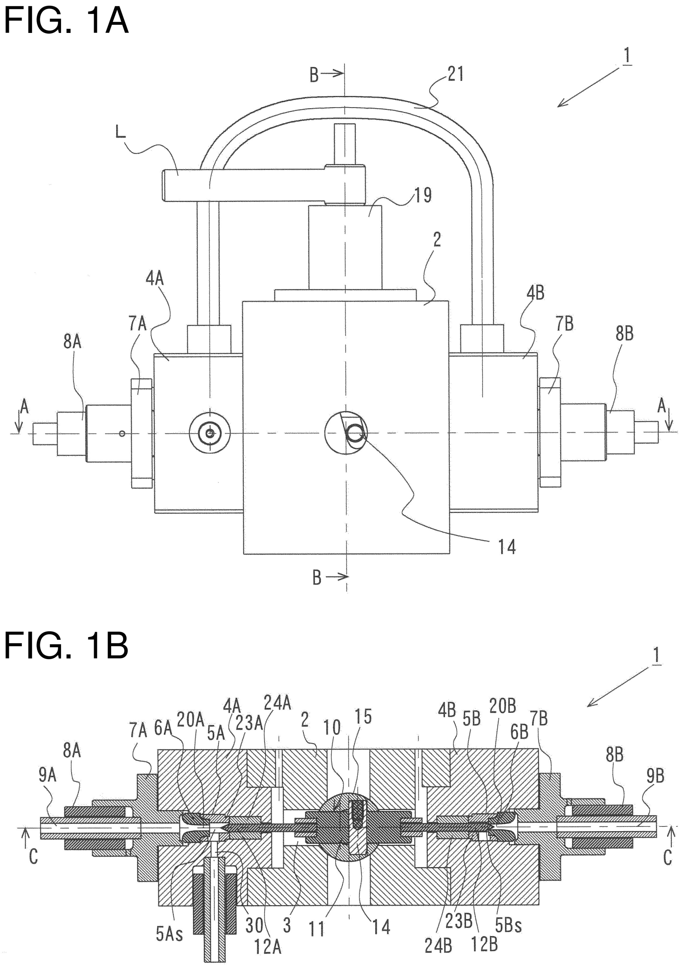

With reference to FIGS. 1 to 4, a switching valve applicable as a three-way valve for slurry and suitable for a wet atomizing apparatus having two processing chambers will be described. As shown in FIGS. 1A and 1B, a switching valve 1 according to the present embodiment includes a first port 20A and a second port 20B. The first port 20A and the second port 20B are disposed to face each other. In the present embodiment, the switching valve 1 switches the ports manually. The first port 20A communicates with a first liquid-material supply flow path 9A connected to a first processing chamber of the wet atomizing apparatus. The second port 20B communicates with a second liquid-material supply flow path 9B connected to a second processing chamber.

The switching valve 1 includes a valve chamber body 2, a first port body portion 4A, and a second port body portion 4B. The valve chamber body 2 includes a valve chamber 3 that penetrates horizontally in a cylindrical shape. The first port body portion 4A and the second port body portion 4B are fixed to left and right sides of the valve chamber body 2. The first port body portion 4A includes the first port 20A. The second port body portion 4B includes the second port 20B. The first port 20A and the second port 20B communicate with the valve chamber 3 while disposed to face each other. Inside the valve chamber 3, a valve element 10 is disposed so as to be displaceable in the axial direction of the valve chamber 3.

The valve element 10 includes a valve main body 11, a first needle portion 12A, and a second needle portion 12B. The valve main body 11, which has a cylindrical shape, is reciprocally slidable in the horizontal left-right direction inside the valve chamber 3. The first port 20A and the second port 20B extend horizontally from both sides of the valve main body 11. Accordingly, as the valve main body 11 is displaced horizontally, the first needle portion 12A and the second needle portion 12B are also displaced horizontally.

The first port body portion 4A includes a first through-hole 5A communicating with the valve chamber 3. The second port body portion 4B includes a second through-hole 5B communicating with the valve chamber 3. A valve-seat member 6A forming the first port 20A is fitted in the first through-hole 5A. The first needle portion 12A is inserted into the first through-hole 5A so as to be displaceable with respect to the first port 20A along the axial direction. Similarly, a valve-seat member 6B forming the second port 20B is fitted in the second through-hole 5B. The second needle portion 12B is inserted into the second through-hole 5B so as to be displaceable with respect to the second port 20B along the axial direction. In the present embodiment, the valve-seat members 6A and 6B are constituted by hard-body seals.

More specifically, a seal member 24A and a passage member 23A are disposed in the first through-hole 5A. The seal member 24A is fitted in an opening region on a side of the valve chamber body 2. The seal member 24A seals around the first needle portion 12A while allowing the first needle portion 12A to slide. The passage member 23A is fitted between the seal member 24A and the valve-seat member 6A. The passage member 23A includes a first passage portion 5As that allows sliding movement of a distal end portion of the first needle portion 12A.

A seal member 24B and a passage member 23B are disposed in the second through-hole 5B. The seal member 24B is fitted in an opening region on a side of the valve chamber body 2. The seal member 24B seals around the second needle portion 12B while allowing the second needle portion 12B to slide. The passage member 23B is fitted between the seal member 24B and the valve-seat member 6B. The passage member 23B includes a second passage portion 5Bs that allows sliding movement of a distal end portion of the second needle portion 12B.

In the present embodiment, an input port 30 to which a liquid material is supplied from a raw-material tank T is connected to the first passage portion 5As, and the input port 30 and the first port 20A are directly communicable.

A first port communication member 7A is fixedly connected to the first port body portion 4A. The first port communication member 7A communicates the first port 20A with a first liquid-material supply flow path 9A via a first connection member 8A.

A second port communication member 7B is fixedly connected to the second port body portion 4B. The second port communication member 7B communicates the second port 20B with a second liquid-material supply flow path 9B via a second connection member 8B.

Accordingly, the hard-body seal that constitutes the valve-seat member 6A is clamped, inside the first through-hole 5A, between opposing end faces of an inner fixing member, which is the first port body portion 4A, and an outer fixing member, which is the first port communication member 7A. Similarly, the hard-body seal that constitutes the valve-seat member 6B is clamped, inside the second through-hole 5B, between opposing end faces of an inner fixing member, which is the second port body portion 4B, and an outer fixing member, which is the second port communication member 7B. As described later, the end faces of each hard-body seal and the inner and outer fixing members that clamp the seal from the front and rear are in direct planar contact. This structure effectively prevents slurry from intruding between each port and peripheral members.

The switching valve 1 according to the present embodiment includes an annular flow path 21 configured to bypass the input port 30 outside the valve body and communicate the input port 30 with the second port 20B. That is, the first passage portion 5As is connected not only to the first port 20A and the input port 30, but also to a first opening 22A of the annular flow path 21. The second passage portion 5Bs is connected not only to the second port 20B, but also to a second opening 22B of the annular flow path 21.

Accordingly, the annular flow path 21 enables liquid material to be supplied to both the first port 20A and the second port 20B through the single input port 30. Thus, there is no need to form, in the valve body, a complicated branched flow path for supplying liquid material from the input port 30 to the first port 20A and the second port 20B, thereby suppressing an increase in valve size.

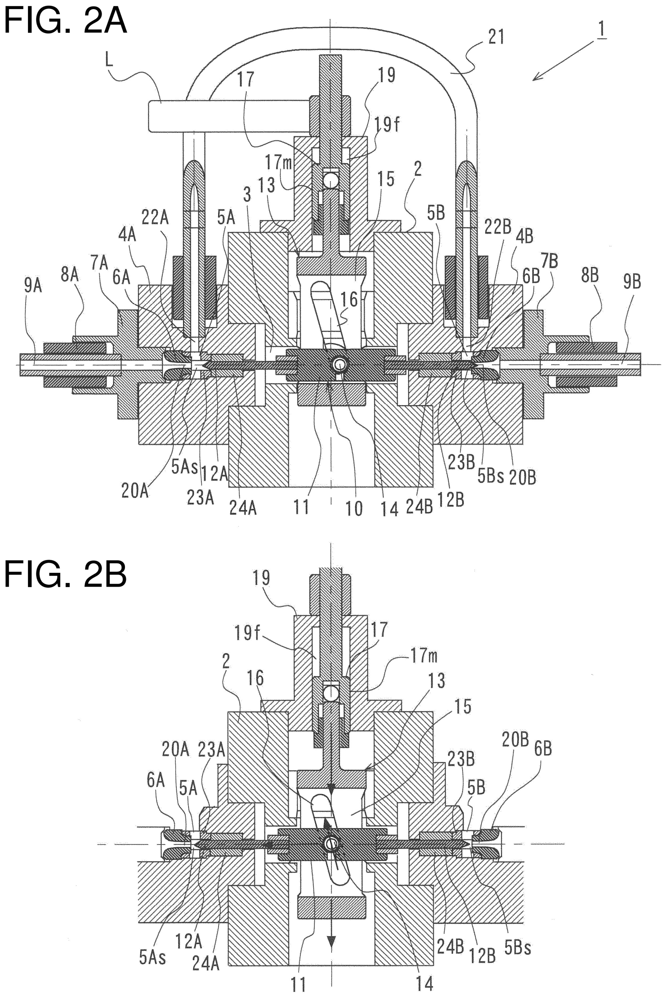

The first needle portion 12A and the second needle portion 12B each include a conical distal end portion. When the valve element 10 is moved to the left in FIGS. 1 and 2, the distal end portion of the first needle portion 12A seats on the valve-seat member 6A. The distal end portion of the first needle portion 12A fits into an opening of the first port 20A, thereby closing the first port 20A. At this time, the distal end portion of the second needle portion 12B retracts from the valve-seat member 6B. Accordingly, the distal end portion of the second needle portion 12B keeps the opening of the second port 20B in an open state.

When the valve element 10 is moved to the right in FIGS. 1 and 2, the distal end portion of the first needle portion 12A retracts from the valve-seat member 6A, thereby opening the first port 20A. At this time, the distal end portion of the second needle portion 12B seats on the valve-seat member 6B. The distal end portion of the second needle portion 12B fits into an opening of the second port 20B, thereby closing the second port 20B.

Thus, by displacement of the valve main body 11, port connection for supplying liquid material from the input port 30 is switched between the first port 20A and the second port 20B. The switching valve 1 according to the present embodiment includes a switching unit 13. The switching unit 13 transmits driving force from a drive mechanism to the valve main body 11 as linear movement. Accordingly, the switching unit 13 switches between the first port 20A and the second port 20B.

The switching unit 13 includes a switching pin 14, a switching main body portion 15, and a coupling portion 17. The switching pin 14 is mounted to penetrate the valve main body 11 in a direction orthogonal to the displacement direction of the valve main body 11 caused by its linear movement (in the present embodiment, the left-right horizontal direction). The switching main body portion 15 includes a switching elongated hole 16, in which at least one end of the switching pin 14 is slidably engaged. The switching main body portion 15, which has a substantially cylindrical shape, is disposed so as to be vertically movable while penetrating a central region of the valve chamber 3. The coupling portion 17 transmits driving force from a manual lever L, which functions as a driving means, to the switching main body portion 15 as vertical linear motion that raises and lowers the switching main body portion 15.

The switching elongated hole 16 extends in the vertical direction while being inclined at a predetermined angle. As the switching main body portion 15 moves up and down, the switching pin 14 is displaced horizontally relative to the switching elongated hole 16, thereby displacing the valve main body 11.

The valve main body 11 is slidably engaged with engagement holes 18 formed to extend vertically on both lateral surfaces of the switching main body portion 15. Thus, the valve main body 11 is held at a substantially constant vertical position relative to the vertical movement of the switching main body portion 15, while being reciprocally movable in the horizontal direction inside the valve chamber 3.

The coupling portion 17 according to the present embodiment transmits the vertical movement of the manual lever L directly as vertical linear movement to the switching main body portion 15. The coupling portion 17 is held inside a holding portion 19, which constitutes an outer housing disposed above the valve chamber body 2. The manual lever L is mounted on an upper portion of the coupling portion 17 that protrudes upward from the holding portion 19. A lower portion of the coupling portion 17 is integrally connected to the switching main body portion 15.

A holding hole 19f is formed inside the holding portion 19. A lower region 17m of the coupling portion 17 is disposed within the holding hole 19f so as to be vertically slidable. Accordingly, when the manual lever L is moved upward or downward, the lower region 17m moves vertically within the holding hole 19f. This vertical movement raises or lowers the switching main body portion 15.

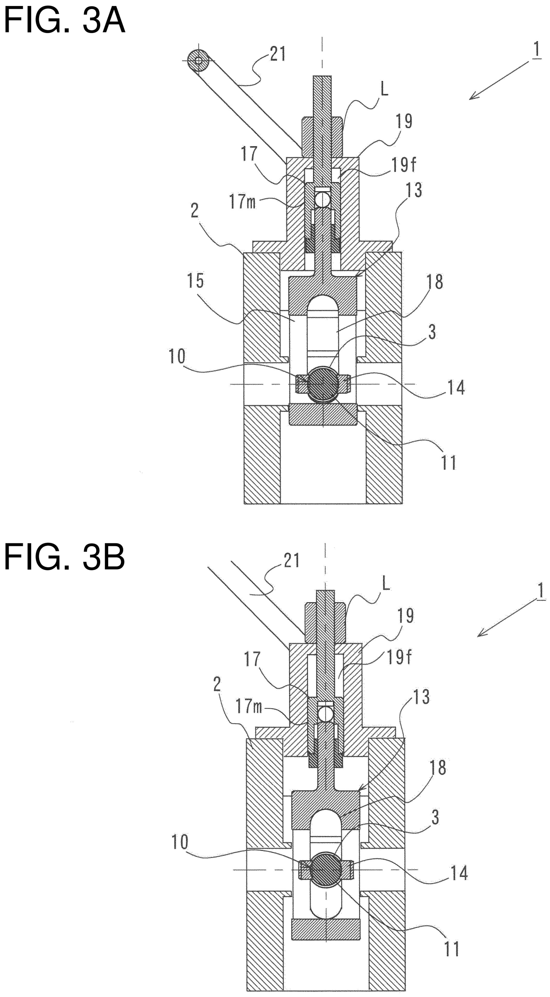

As shown in FIGS. 2A and 3A, when the manual lever L is lifted upward to raise the switching main body portion 15, the switching pin 14 moves to the right in FIGS. 1 and 2 while relatively descending within the switching elongated hole 16. The valve main body 11, which is connected to the switching pin 14, is also displaced to the right.

As a result, as shown in FIG. 2A, the distal end portion of the first needle portion 12A retracts from the valve-seat member 6A, thereby opening the first port 20A. Consequently, the input port 30 directly communicates with the first port 20A via the first passage portion 5As. At this time, the second needle portion 12B is displaced to the right and seats on the valve-seat member 6B, closing the opening of the second port 20B. Thus, the switching valve 1 is placed in a first flow-path connection state, in which the input port 30 communicates with the first liquid-material supply flow path 9A leading to the first processing chamber via the first port 20A.

In the first flow-path connection state, the opening of the input port 30 communicates, at the first passage portion 5As near the opening of the first port 20A, with the first opening 22A of the annular flow path 21. However, in the second passage portion 5Bs, to which the second opening 22B of the annular flow path 21 is connected, the opening of the second port 20B is closed by the distal end portion of the second needle portion 12B. Accordingly, no liquid material is introduced to the second port 20B through the annular flow path 21.

On the other hand, as shown in FIGS. 2B and 3B, when the manual lever L is pushed downward, the switching main body portion 15 descends through the coupling portion 17. The switching pin 14 moves to the left in FIGS. 1 and 2 while relatively ascending within the switching elongated hole 16. The valve main body 11, to which the switching pin 14 is connected, also displaces to the left. When the switching main body portion 15 descends to its lowermost position, the switching pin 14 reaches the leftmost position at the upper end of the switching elongated hole 16. At this time, the valve main body 11 is displaced to its leftmost position.

At this time, the distal end portion of the first needle portion 12A seats on the valve-seat member 6A and fits into the opening of the first port 20A to close the first port 20A. Accordingly, communication between the input port 30 and the first port 20A is shut off. Meanwhile, the second needle portion 12B is displaced leftward, and the distal end portion of the second needle portion 12B retracts from the valve-seat member 6B, thereby opening the second port 20B.

Thus, the second port 20B communicates, at the second passage portion 5Bs, with the second opening 22B of the annular flow path 21. Accordingly, the input port 30 communicates with the second port 20B via the annular flow path 21. In this case, the switching valve 1 becomes a second flow-path connection state, in which the input port 30 communicates with the second liquid-material supply flow path 9B leading to the second processing chamber through the second port 20B.

In the switching valve 1 according to the present embodiment, the connection between the input port 30 and the first port 20A and the connection between the input port 30 and the second port 20B is immediately switched by simple operation of vertically moving the manual lever L. The liquid material is introduced from the input port 30 into the switching valve 1 while switching by simply changing the flow path without shutting off the flow, which smoothly supplies the liquid material.

In the switching valve 1 according to the present embodiment, the valve main body 11, which constitutes the valve element 10, and the first needle portion 12A and the second needle portion 12B are formed as separate components. The first needle portion 12A and the second needle portion 12B are detachable from the valve main body 11. Accordingly, for example, when only one of the needle portions is damaged, it is unnecessary to replace the entire valve element. The damaged needle portion may only be replaced.

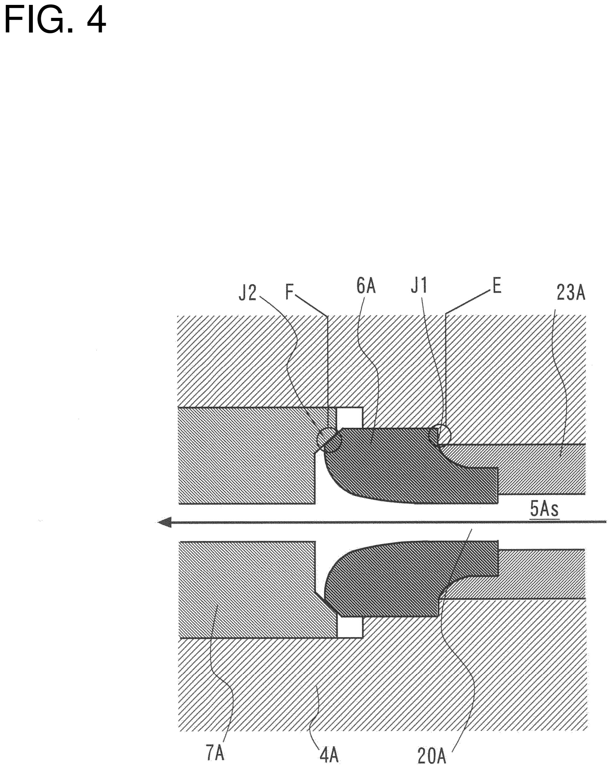

In the switching valve 1 according to the present embodiment, as shown in FIG. 4, the valve-seat members 6A and 6B that substantially form the respective opening flow paths of the first port 20A and the second port 20B are configured as hard-body seals based on direct planar contact between hard materials, for example, metal such as cemented carbide, stainless steel, or ceramics. As the valve-seat members 6A and 6B have a structure common to both ports, the valve-seat member 6A on the first-port side is shown and described below as a representative example.

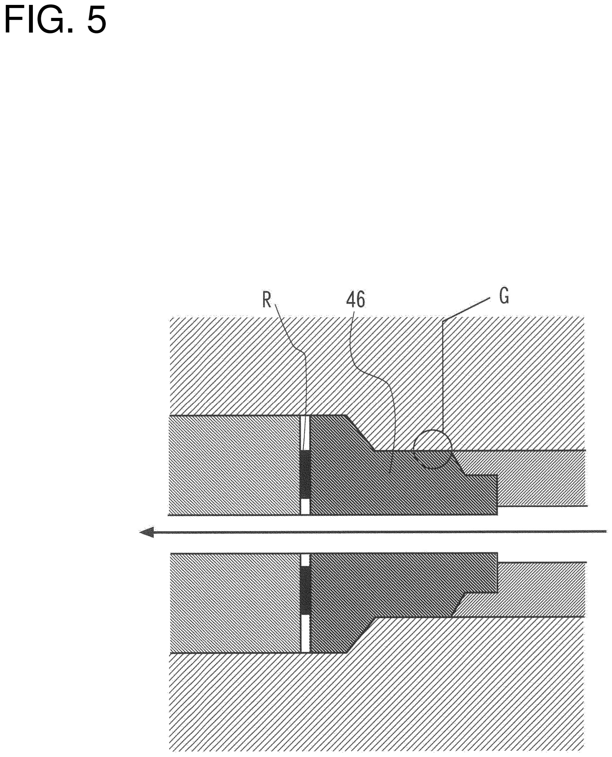

Unlike a conventional configuration using an elastic sealing member R such as an O-ring, as shown in FIG. 5, the valve-seat members 6A and 6B according to the present embodiment achieve a sealing state solely by tightening in a directly planar-contacted state between hard-body components. This configuration exhibits excellent airtightness even under relatively severe pressure conditions inside an atomizing apparatus.

In the present embodiment, a sealing surface formed on the seal-holding end face of the first port communication member 7A, which serves as an outer fixing member, and a sealing engagement end face formed on the first port body portion 4A, which serves as an inner fixing member, constitute a directly planar-contact seal, such as a metal touch, at a joint surface J1 indicated by a circle E. Similarly, a sealing surface formed on the seal-holding end face of the second port communication member 7B, which serves as an outer fixing member, and a sealing engagement end face formed on the second port body portion 4B, which serves as an inner fixing member, constitute a directly planar-contact seal , such as a metal touch, at a joint surface J2 indicated by a circle F. Thus, in the present embodiment, reliable sealing is achieved between the members around each port. Accordingly, unlike the abutting surface indicated by circle G in the conventional valve-seat member 46 shown in FIG. 5, gaps through which high-pressure slurry may intrude can be effectively suppressed.

It is desirable that the hard-body seal be formed of a material having relatively high hardness. For example, a metal seal using a high-hardness stainless steel such as SUS440C or a cemented carbide may be adopted. However, the hard-body seal is not limited to metals; a ceramic component may also be used. The hard-body material that constitutes the seal is appropriately selected depending on the design requirements.

By the direct planar-contact pressure generated at appropriate locations of the hard-body seal, the switching valve 1 according to the present embodiment can suppress intrusion of high-pressure slurry between members. Accordingly, problems such as damage to elastic sealing members caused by high-pressure slurry intrusion are eliminated, enabling practical use of the valve as a three-way valve compatible with slurry.

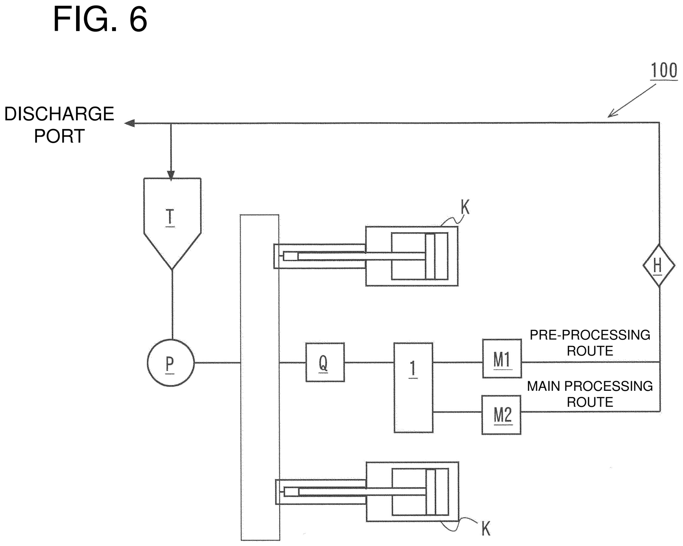

As shown in FIG. 6, the switching valve 1 according to the present embodiment can be incorporated into a processing circuit of a conventional wet atomizing apparatus having two processing chambers, enabling switching and supply of liquid material to the two processing chambers.

FIG. 6 illustrates a case in which a first processing chamber M1 and a second processing chamber M2 are arranged in parallel. This corresponds to a basic configuration of a conventional wet atomizing apparatus. Alternatively, the first processing chamber M1 and the second processing chamber M2 may be arranged in series, and switching may be performed between a continuous-processing route and a bypass route.

In such a wet atomizing apparatus, a liquid material in which raw material substances are dispersed and stored in a raw-material tank T is delivered to a pressure intensifier K by a supply pump P, and is supplied to a processing step as a high-pressure fluid pressurized to a predetermined pressure. Here, the first processing chamber M1 is a pre-processing chamber that performs coarse crushing. The second processing chamber M2 is a main processing chamber.

In the wet atomizing apparatus 100 having the parallel arrangement shown in FIG. 6, during an initial processing step, the switching valve 1 is placed in the first flow-path connection state. Accordingly, the liquid material is supplied only to the first processing chamber M1, where pre-processing (coarse crushing) is performed. Thereafter, the pre-processed liquid material is returned to the raw-material tank T through a heat exchanger H for cooling, without undergoing atomizing processing.

After completion of the pre-processing step, the switching valve 1 is switched to the second flow-path connection state, and the atomizing step is performed. That is, the liquid material that has undergone only pre-processing is delivered from the raw-material tank T to the pressure intensifier K by the supply pump P, and, after passing through a high-pressure filter Q as a pressurized high-pressure fluid, is supplied directly only to the second processing chamber M2 by the switching valve 1 switched to the second flow-path connection state. Then, a first atomizing processing is performed. Subsequently, until the raw material substances reach a predetermined particle diameter, the liquid material is repeatedly supplied directly only to the second processing chamber M2 by the switching valve 1 remaining in the second flow-path connection state, and repeated atomizing processing is performed.

Thus, in the wet atomizing apparatus 100 in which the two processing chambers M1 and M2 for pre-processing and atomizing are arranged in parallel, the process can be immediately switched from the pre-processing step by the first processing chamber M1 to the atomizing step by the second processing chamber M2 simply by switching the single switching valve 1 from the first flow-path connection state to the second flow-path connection state.

In the switching valve 1 according to the present embodiment, which is disposed in the processing circuit of the wet atomizing apparatus, the pre-processing step and the atomizing step can be switched as separate routes rapidly with a single action on the switching valve 1. During switching, only the introduction route of the liquid material is changed, and the flow is not shut off or stagnated. Accordingly, the liquid material is always supplied smoothly to any of the processing chambers.

When the manual lever performs rotational motion, the coupling portion converts the rotational motion into linear motion and transmits it to the switching main body portion. As an example of such a conversion mechanism, a screw mechanism may be used. Specifically, the holding hole may be configured as a female-threaded hole, and a male-threaded portion that screws into the female-threaded hole may be provided on a lower region of the coupling portion. In this case, the lower region moves linearly in the vertical direction by a screwing rotational movement of the male-threaded portion relative to the female-threaded hole as the manual lever is rotated, thereby raising and lowering the switching main body portion. Simultaneously with the vertical movement of the switching main body portion, the switching pin is displaced in the horizontal direction together with the valve main body. Accordingly, simple rotational operation of the manual lever enables easy switching between the ports.

### Second Embodiment

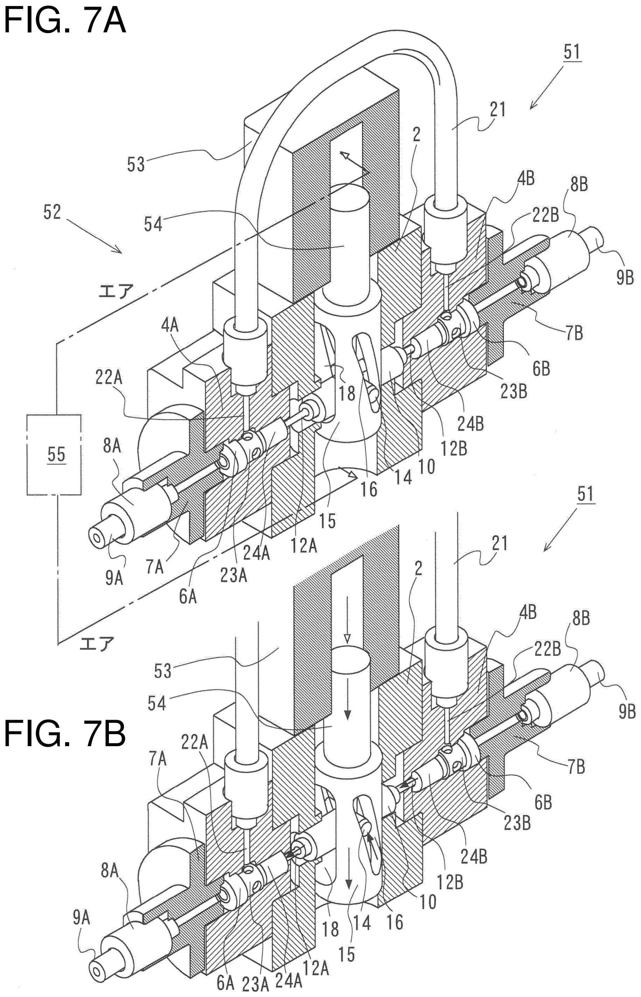

In the first embodiment, the switching valve 1 was configured such that port connection is manually switched. However, a mechanical switching configuration that enables automatic control may alternatively be adopted. For example, an air cylinder device 52 as shown in FIG. 7 may be used. Aside from the drive mechanism using the air cylinder device 52, the valve configuration is common to the manual configuration shown in FIGS. 1 to 3, and identical reference signs are assigned to common components in FIG. 7.

A cylinder 53 is installed on an upper portion of the valve chamber body 2 instead of the manual lever L. A piston rod 54, which is vertically movable within the cylinder 53 according to air supply and discharge, is integrally coupled to the switching main body portion 15 instead of the coupling portion 17. In the air cylinder device 52, a control unit 55 controls the air supplied to and discharged from the cylinder 53 to raise and lower the switching main body portion 15 via the piston rod 54 by a desired distance. Thus, the switching pin 14 and the switching main body portion 15 are moved in the horizontal left-right direction by the amount necessary to switch between the first flow-path connection state and the second flow-path connection state.

When processing liquid material using the wet atomizing apparatus 100, various liquid materials may be processed. Accordingly, depending on the liquid material, automatic switching of the switching valve 1 may be performed based on instructions from the control unit 55, for example, when main crushing is to be performed stepwise after coarse crushing, or when the device includes multiple processing chambers and at least one of the processing chambers becomes inoperative, and priority switching to another processing chamber is required. As a result, improvements in crushing efficiency and flexible response to problems can be achieved.

In a wet atomizing apparatus having the first processing chamber M1 and the second processing chamber M2, the operating state of the processing chambers may be monitored based on information from a detection sensor (not shown) that detects flow rate or electromagnetic values indicating that at least one of the processing chambers is not operating. Based on the operating state, the control unit 55 may switch the switching valve 1.

Although the embodiments illustrate cases in which the switching valve is incorporated into a wet atomizing apparatus, the switching valve according to the present invention is not limited thereto. The switching valve can be widely applied to devices having flow-path circuits that switch and supply slurry-type fluid between different ports.

### REFERENCE SIGNS LIST

- 1, 51: Switching valve
- 2: Valve chamber body
- 3: Valve chamber
- 4A: First port body portion
- 4B: Second port body portion
- 5A: First through-hole
- 5B: Second through-hole
- 5As: First passage portion
- 5Bs: Second passage portion
- 6A, 6B, 46: Valve-seat member
- J1, J2: Metal-touch planar-contact seal
- R: Elastic sealing member
- 7A: First port communication member
- 7B: Second port communication member
- 8A: First connection member
- 8B: Second connection member
- 9A: First liquid-material supply flow path
- 9B: Second liquid-material supply flow path
- 10: Valve element
- 11: Valve main body
- 12A: First needle portion
- 12B: Second needle portion
- 13: Switching unit
- 14: Switching pin
- 15: Switching main body portion
- 16: Switching elongated hole
- 17: Coupling portion
- 17m: Lower region of coupling portion
- 18: Engagement hole
- 19: Holding portion
- 19f: Holding hole
- L: Manual lever
- 20A: First port
- 20B: Second port
- 21: Annular flow path
- 22A: First opening
- 22B: Second opening
- 23A, 23B: Passage member
- 24A, 24B: Seal member
- 30: Input port
- 52: Air cylinder device
- 53: Cylinder
- 54: Piston rod
- 55: Control unit
- 100: Wet atomizing apparatus
- T: Raw-material tank
- P: Supply pump
- K: Pressure intensifier
- Q: High-pressure filter
- M1: First processing chamber
- M2: Second processing chamber
- H: Heat exchanger

## Claims

1. A switching valve (1, 51), comprising:
a valve body (2);
a first port (20A) and a second port (20B) disposed to face each other inside the valve body (2) to communicate with each other;
an input port (30) communicating with the first port (20A) and the second port (20B) to supply a slurry liquid material; and
a valve element (10) configured to switch connection of the first port (20A) and the second port (20B) with respect to the input port (30), the valve element (10) including:
a first needle portion (12A) configured to open and close an opening of the first port (20A);
a second needle portion (12B) configured to open and close an opening of the second port (20B); and
hard-body seals (6A, 6B, 46) configured to seal the first port (20A) and the second port (20B), respectively.

2. The switching valve (1, 51) according to claim 1, wherein
the hard-body seals (6A, 6B, 46) are clamped in a directly planar-contact manner between an inner fixing member (4A, 4B) and an outer fixing member (7A, 7B), the first port (20A) and the second port (20B) being formed in the inner fixing member (4A, 4B), the inner fixing member (4A, 4B) disposed inside the valve body (2), and the outer fixing member (7A, 7B) fixed from an outside of the valve body (2).

3. The switching valve (1, 51) according to claim 1 or 2, wherein
the valve element (10) includes a valve main body (11) detachably attached to the first needle portion (12A) and the second needle portion (12B).

4. The switching valve (1, 51) according to any one of claims 1 to 3, further comprising:
a switching unit (13) configured to transmit driving force of a drive means to the valve element (10) as linear motion along a horizontal direction, the switching unit (13) configured to switch opening and closing between the first port (20A) and the second port (20B).

5. The switching valve (1, 51) according to claim 4, wherein
the switching unit (13) includes:
a switching pin (14) mounted to penetrate the valve element (10); and
a switching main body portion (15) having a switching elongated hole (16) in which at least one end of the switching pin (14) is slidably engaged,
wherein
the switching elongated hole (16) extends in a vertical direction and is inclined at a predetermined angle, such that the valve element (10) is displaced by movement of the switching pin (14) in relatively vertical and horizontal directions based on elevation of the switching main body portion (15).

6. The switching valve (1, 51) according to any one of claims 1 to 5, wherein
the input port (30) is connected to the first port (20A), and
the switching valve (1, 51) further comprises an annular flow path (21) configured to bypass the valve body (2) to communicate the input port (30) with the second port (20B).

7. A wet atomizing apparatus (100), comprising:
a pressure intensifier (K) configured to pressurize a liquid material;
the switching valve (1, 51) according to any one of claims 1 to 6, the switching valve (1, 51) configured to switch a route of the liquid material pressurized by the pressure intensifier (K); and
an atomizing chamber (M1, M2) configured to atomize the liquid material.
